# EUROPÄISCHE PATENTSCHRIFT

(11) **EP 2 209 991 B1**
(45) Veröffentlichungstag und Bekanntmachung des Hinweises auf die Patenterteilung: **25.05.2011**
(21) Anmeldenummer: 08849166.7
(22) Anmeldetag: 12.11.2008
(51) Int. Cl.: F03D 7/02

(54) **WINDENERGIEANLAGE MIT HEIZEINRICHTUNG**
WIND ENERGY INSTALLATION WITH A HEATING DEVICE
ÉOLIENNE À DISPOSITIF DE CHAUFFAGE

(30) Priorität: 12.11.2007 DE 102007054215
(43) Veröffentlichungstag der Anmeldung: 28.07.2010
(73) Patentinhaber: Repower Systems AG, 22297 Hamburg (DE)
(72) Erfinder: BOLLN, Sönke, 25746 Heide/Holstein (DE); SIEVERS, Oliver, 24787 Fockbek (DE); SCHEFFNER, Michael, 24782 Rickert (DE)
(74) Vertreter: Glawe, Delfs, Moll
(86) Internationale Anmeldenummer: PCT/EP2008/009515
(87) Internationale Veröffentlichungsnummer: WO 2009/062668

(56) Entgegenhaltungen:
- DE-A1-102004 061 391
- US-A1- 2004 178 638
- LACROIX A ET AL: "Wind Energy: cold weather issues" 20000601, [Online] 1. Juni 2000 (2000-06-01), Seiten 1-17, XP008104783 Gefunden im Internet: URL:http://www.ecs.umass.edu/mie/labs/rerl /research/Cold_Weather_White_Pa per.pdf>

## Beschreibung

Die Erfindung betrifft eine Windenergieanlage mit einem Turm, einer darauf angeordneten Gondel, welche einen Windrotor und einen damit angetriebenen Generator umfasst, einem Umrichter zur Abgabe elektrischer Energie und einer Steuereinrichtung, wobei die Windenergieanlage an ein Netz angeschlossen ist und für die Steuereinrichtung ein Temperatursensor und eine Heizeinrichtung vorgesehen sind.

Eine Windenergieanlage nach dem Stand der Technik ist aus US 2004/178638 bekannt.

Zur Gewährleistung günstiger Betriebsbedingungen sind Windenergieanlagen häufig an exponierten Lagen aufgestellt, welche windreichere, aber auch damit rauere Umgebungsbedingungen bieten. Dazu zählen auch Küstenabschnitte oder Höhenzüge außerhalb von gemäßigten Breitenzonen, insbesondere in subarktischen oder arktischen Regionen. Aufgrund dieser Ortswahl und aufgrund der Tatsache, dass viele Komponenten der Windenergieanlage in großer Höhe angeordnet sind, stellt sich damit die Problematik des Schutzes vor zu niedrigen Temperaturen. Dies gilt besonders für die in Steuereinrichtungen verwendete empfindliche Elektronik

Es ist generell bekannt, Windenergieanlagen bei der Aufstellung an extrem klimatischen Orten mit einer Klimatisierungseinrichtung für die Gondel und die darin angeordneten Komponenten zu versehen. Eine solche Klimatisierung, die sowohl Heizung wie auch Kühlung umfassen kann, ist aber ausgesprochen energieaufwendig und verringert damit im beträchtlichen Maße den Wirkungsgrad der Windenergieanlage. Dies gilt auch, wenn auf eine Kühlung verzichtet wird, und stattdessen nur Heizungen vorgesehen werden. Dies ist für die Aufstellung in klimatisch kühleren Gegenden zwar ausreichend, jedoch ist für die Beheizung immer noch ein beträchtlicher Energieeinsatz erforderlich, wodurch der Wirkungsgrad sich entsprechend verschlechtert.

Zur Abhilfe ist deswegen vorgeschlagen worden, den die Elektronik der Steuereinrichtung aufnehmenden Schaltschrank mit einer Entfeuchtungsanlage zu versehen. Sie ist dazu ausgebildet, die Feuchtigkeit in dem Schaltschrank soweit zu verringern, dass es auch bei kälteren Temperaturen nicht zu einer Taubildung kommt. Damit ist ein Schutz der Elektronik vor den negativen Folgen des Feuchtigkeitsniederschlags gegeben, ohne dass dabei der ganze Schaltschrank auf verhältnismäßig hohe Temperaturwerte erwärmt zu werden braucht, wie es klassischerweise bei einer reinen Heizeinrichtung erforderlich ist. Der Energieverbrauch verringert sich dadurch.

Ein Nachteil der bekannten Verfahren und Vorrichtungen liegt in ihrem Verhalten bei Netzausfall. Da die Heizeinrichtung bzw. die Entfeuchtungseinrichtung mit Netzleistung gespeist ist, fallen sie bei einem Netzausfall aus; entsprechend schalten sie sich bei Netzwiederkehr wieder ein. Hierbei liegt ein Problem darin, dass bei verhältnismäßig niedrigen Außentemperaturen während des Netzausfalls eine solche Auskühlung der Windenergieanlagen und ihrer Komponenten stattgefunden haben kann, dass es bei einem einfachen Wiedereinschalten der Windenergieanlage und deren Heizeinrichtungen zu Störungen kommt, und zwar insbesondere an der empfindlichen Steuerelektronik.

Der Erfindung liegt die Aufgabe zu Grunde, eine Windenergieanlage der eingangs genannten Art dahingehend zu verbessern, dass ein verbessertes Verhalten insbesondere gegenüber Netzausfall bei tiefen Temperaturen erreicht ist.

Die erfindungsgemäße Lösung liegt in den Merkmalen der unabhängigen Ansprüche. Vorteilhafte Weiterbildungen sind Gegenstand der abhängigen Ansprüche.

Erfindungsgemäß ist bei einer Windenergieanlage mit einem Turm, einer darauf angeordneten Gondel, welche einen Windrotor und einen davon angetriebenen Generator umfasst, einem Umrichter zur Abgabe elektrischer Energie und einer Steuereinrichtung, wobei für die Steuereinrichtung ein Temperatursensor und eine Heizeinrichtung vorgesehen sind, gemäß der Erfindung vorgesehen, dass ein zusätzliches Vorwärmmodul einen Thermoschalter, der die Temperatur mindestens einer Komponente der Windenergieanlage überwacht und bei Erreichen einer Schwelle betätigt wird, eine Kontrolleinheit und eine Ausgabeeinrichtung umfasst und in der Weise mit der Heizeinrichtung zusammenwirkt, dass die Kontrolleinheit die Heizeinrichtung betätigt, bis der Thermoschalter anspricht und daraufhin die Ausgabeeinrichtung betätigt wird, welche ein Freigabesignal übermittelt.

Der Kern der Erfindung besteht in dem Gedanken, die Windenergieanlage am Anfang einer Betriebsaufnahme in einer bestimmten vordefinierten Weise hochzufahren. Hierbei wird für das Hochfahren der Temperatur in der Windenergieanlage Rechnung getragen. Dies beruht auf dem Gedanken, dass ein Betriebsausfall von Haus aus eine an sich unbestimmte Dauer aufweist, wie beispielsweise der Netzausfall. Dieser kann solange dauern, dass eine vorher betriebswarme Windenergieanlage vollständig auskühlt. Mittels eines Netzausfalldetektors kann der Zustand des Netzes überwacht werden. Kehrt nun das Netz zurück, so würde herkömmlicherweise zwar eine eventuell vorhandene Heizeinrichtung betätigt, im Übrigen würde die Windenergieanlage aber sofort hochgefahren werden. Dies bedeutet, dass die empfindliche Elektronik der Steuereinrichtung mit voller Betriebsspannung bzw. -strom beaufschlagt wird. Hierbei kann es zu Schäden kommen. Dies gilt insbesondere auch für die Leistungshalbleiter (IGBT) der Umrichter. Die Erfindung setzt nun an der Stelle an, dass bei der Wiederkehr der Netzspannung am Ende eines Netzausfalls das Hochfahren der Windenergieanlage von der Kontrolleinheit in der Weise gesteuert wird, dass zuerst die Heizeinrichtungen betätigt werden und erst nachdem die entsprechenden empfindlichen Komponenten der Windenergieanlage ausreichend erwärmt sind, ein Freigabesignal ausgegeben wird, um den normalen Hochfahrprozess zu starten. Das erfindungsgemäße Vorwärmmodul ist also derart ausgebildet, dass mit einer bestimmten Sequenz zuerst bestimmte Heizeinrichtungen betätigt werden, bis eine vorgeschriebene Temperatur erreicht wird, und erst danach eine Freigabe für das Hochfahren an sich erfolgt. Dabei wird ein kontrolliertes Anwärmen der Windenergieanlage erreicht. Dies stellt insbesondere für den Betrieb in kühleren und kalten Klimazonen einen erheblichen Vorteil dar. Die Gefahr von Ausfällen aufgrund des vorzeitigen Einschaltens noch kalter Komponenten, wie es herkömmlicherweise im Stand der Technik auch bei dem Vorhandensein von Heizeinrichtungen nach Netzausfällen auftreten konnte, besteht dank der Erfindung nicht mehr.

Vorzugsweise wirkt die Kontrolleinheit mit ihrem Freigabesignal direkt oder indirekt auf eine Schalteinheit ein, welche die Stromversorgung mindestens einer Komponente der Windenergieanlage herstellt. Im einfachsten Fall wirkt das Freigabesignal direkt auf ein Schaltrelais. Es kann aber auch eine indirekte Wirkweise vorgesehen sein, bspw. indem über das Freigabesignal eine unterbrechungsfreie Stromversorgungseinheit (USV-Einheit) aktiviert wird, welche dann die entsprechenden Komponenten der Windenergieanlage mit Strom versorgt. Vorzugsweise ist dabei die USV-Einheit so ausgebildet, dass sie die Schalteinheit umfasst, und die Kontrolleinheit ist dazu ausgebildet, die USV-Einheit erst dann durchzuschalten, wenn die übrigen Komponenten auf eine bestimmte Temperatur aufgeheizt sind. Die USV-Einheit meint dabei eine Einheit, die auf irgendeine elektrische Energiequelle zur Versorgung der Komponenten zurückgreift, z.B. also eine Batterie, einen Kondensator, einen Diesel-Generator, eine Brennstoffzelle oder das elektrische Netz.

Das Vorwärmmodul verwendet als Eingangssignale den von einem Temperatursensor gemessenen Wert. Vorzugsweise ist aber zusätzlich ein Zeitglied vorgesehen, das eine Mindesteinschaltdauer für die Heizeinrichtung vorgibt. Dabei kann das Zeitglied so eingestellt sein, dass entweder eine Mindestzeit nach der Netzwiederkehr bestimmt wird und/oder eine Mindestzeit nach dem vom Temperaturmesssensor bestimmten Erreichen der Temperaturschwelle. In beiden Fällen kann durch das Vorsehen der Mindestzeit erreicht werden, das unabhängig von der jeweils herrschenden Temperatur und anderen atmosphärischen Bedingungen, wie Luftfeuchte, eventuell vorhandener Niederschlag oder Restfeuchte von Kontakten und elektrischen Bauelementen verdunstet. Dies ist insbesondere für den Betrieb in sehr feuchten klimatischen Umgebungen, wie an der Küste oder Offshore, ein erheblicher Gewinn für die Betriebssicherheit. Insbesondere kann das Vorwärmmodul auch die gemessene Feuchte eines Feuchtesensors auswerten und die Heizeinrichtung so lange einschalten bis eine Temperaturschwelle über- und/oder eine relative Feuchte unterschritten wird.

Es kann genügen, eine Heizeinrichtung für die empfindlichste Komponente der Windenergieanlage vorzusehen (in der Regel wird dies ein Schaltschrank mit den Leistungshalbleitern und der Steuereinrichtung sein). Vorzugsweise werden aber in der Regel mehrere Heizeinrichtungen vorgesehen sein. Damit können verschiedene Komponenten der Windenergieanlagen vorgewärmt werden, insbesondere solche elektronische Bauteile oder Schaltschränke mit eingebauten elektronischen Bauteilen. Vorzugsweise handelt es sich bei diesen um eine Einheit für eine unterbrechungsfreie Stromversorgung, eine Top-Box, welche in der Gondel angeordnet ist und die in der Gondel angeordneten Komponenten der Steuereinrichtung umfasst, und/oder eine Bodenbox, welche in der Regel am Turmfuß oder auf einer Zwischenplattform in niedriger Höhe angeordnet ist, um die unten liegenden Komponenten der Steuereinrichtung sowie die Verbindungen von und zum Transformator, welcher die Windenergieanlage mit dem Netz verbindet, vorzuwärmen. Darüber hinaus sind auch andere Komponenten denkbar, wie z.B. Getriebe, Ölsumpfheizung, Ölsteuerung, Schmiereinrichtungen, Rotorblattheizung, Rollenlager, Umrichtersteuerung, Flugbefeuerungseinrichtungen, Kommunikationselektronik, Schwingungsdämpfer oder Stufen-Transformatorsteuerungen.

Besonders bevorzugt ist es, bei Windenergieanlagen mit einem Windrotor, dessen Blätter mittels einer Pitchsteuereinheit bezüglich ihres Anstellwinkels verstellt werden, einen Temperatursensor sowie eine Heizeinrichtung an der Pitchsteuereinheit vorzusehen. Diese ist ein für den sicheren Betrieb der Windenergieanlagen besonders entscheidendes Element, welches bereits mit dem Hochfahren der Windenergieanlage im beträchtlichen Umfang betätigt werden muss (bspw. zum Bewegen der Rotorblätter aus ihrer als Windfahne wirkenden Ruhestellung hinaus). Das Vorwärmen des Pitchsystems kann damit genauer vorgenommen werden. Vorzugsweise ist zusätzlich ein Zeitrelais vorgesehen, welches parallel zum Temperatursensor geschaltet ist und nach einer einstellbaren Zeit schaltet. Damit kann auch im Fall eines Defektes des Temperatursensors oder aufgrund eines Defektes der Heizeinrichtung für diese Einheit bei Erreichen einer bestimmten, als sicher angesehenen Zeit der Hochfahrprozess fortgesetzt werden. Insgesamt bietet die gesonderte Überwachung von einzelnen der Komponenten, wie der Pitchsteuereinheit, den Vorteil, dass nach Erreichen von dessen Betriebstemperatur sofort die anderen Komponenten, wie Top-Box, Bodenbox oder die USV-Einheit automatisch zugeschaltet werden können, um dann den Hochfahrprozess in an sich konventioneller Weise auszuführen.

Insbesondere ist es zweckmäßig, wenn die Kontrolleinheit dazu ausgebildet ist, die USV-Einheit erst dann zuzuschalten, wenn die übrigen Komponenten auf eine bestimmte Temperatur aufgeheizt sind.

Bei einer bevorzugten Ausführungsform ist ein Umgebungstemperatursensor vorgesehen, der mit einem Bypassmodul zusammenwirkt, welches an der Ausgabeeinrichtung das Freigabesignal bei Überschreiten einer bestimmten Außentemperatur direkt freischaltet. Vorzugsweise ist der Umgebungstemperatursensor derart angeordnet, dass eine repräsentative Temperatur gemessen und ausgewertet wird. Das Bypassmodul ist dazu ausgebildet, dass in dem Fall, wenn dieser Temperaturwert größer ist als der eingestellte Parameter (bspw. 5°C), das Freigabesignal direkt ausgegeben wird. Die Komponenten der Windenergieanlagen sind dann warm genug, um sofort mit dem Hochfahren der Windenergieanlage ohne Vorwärmen zu beginnen. Dazu wird die Steuereinrichtung der Windenergieanlage sofort nach Netzwiederkehr mit Spannung beaufschlagt. Unnötige Stillstandszeiten der Windenergieanlage bei Netzwiederkehr werden damit bei warmer Witterung vermieden.

Vorzugsweise betätigt die Kontrolleinheit die Heizeinrichtung erst, wenn mindestens ein Temperaturgrenzwert mindestens einer der Komponenten unterschritten wurde. Die Kontrolleinheit kann dazu ein logisches Verknüpfungsglied aufweisen, welches im Sinne einer oder-Verknüpfung arbeitet. Liegt nun die Temperatur an irgendeiner der Komponenten unterhalb einer vom Betreiber bestimmten Schwelle, so wird die Heizeinrichtung betätigt. Liegen sie alle oberhalb der Schwelle, so sind die Komponenten der Windenergieanlage sämtlich warm genug, und das Hochfahren kann ohne Vorwärmen durchgeführt werden.

Zweckmäßigerweise ist weiter ein Nachheizmodul vorgesehen, welches vorzugsweise in Abhängigkeit von der Außentemperatur die Heizeinrichtungen auch nach Ausgeben des Freigabesignals betätigt. Damit kann der Start der Windenergieanlage bei besonders niedrigen Außentemperaturen bereits früher erfolgen, wobei dank des Nachheizens erreicht wird, dass noch während des Hochfahrprozesses der Windenergieanlage die kritischen Komponenten weiter beheizt werden. Damit kann auch einem unerwünschten Absinken der Temperatur bei Betriebsbeginn der Windenergieanlage entgegengewirkt werden, bspw. dann, wenn die Gondel in die Windrichtung gedreht wird und damit die zusätzliche Gefahr einer Abkühlung der Komponenten entsteht. Die Sicherheit des Aufwärmprozesses kann damit erhöht werden; weiterhin kann damit die Vorwärmzeit verkürzt werden, so dass die Windenergieanlage insgesamt schneller hochgefahren werden kann.

Das Nachheizmodul kann bei einer weiteren Ausführungsform der Erfindung unabhängig vom Start der Windenergieanlage in Abhängigkeit der Umgebungstemperatur die Heizeinrichtungen aktivieren, um ein schädliches Auskühlen der Windenergieanlage während des Betriebs zu verhindern, wenn beispielsweise die Windgeschwindigkeit so gering ist, dass die Windenergieanlage wenig Energie und damit wenig Abwärme erzeugt. Dazu weist das Nachheizmodul vorzugsweise einen Temperaturwächter auf, welcher mit der Kontrolleinheit so zusammenwirkt, dass im Betrieb beim Unterschreiten einer Grenztemperatur die Heizeinrichtung betätigt wird. Zusätzlich kann ein Innentemperatursensor vorgesehen sein, der als ein Eingangssignal an den Temperaturwächter angelegt ist. Erkennt der Innentemperatursensor, dass die Temperatur in der Gondel der Windenergieanlage auch noch unterhalb einer bestimmten Temperatur liegt, so wird der Temperaturwächter ausgelöst und es erfolgt das Nachheizen. Erreicht die Windenergieanlage im Betrieb dann aufgrund der Abwärme der Komponenten, insbesondere des Getriebes, die gewünschte Temperatur, erkennt dies der Innentemperatursensor und das Nachheizen wird durch das Nachheizmodul beendet.

Vorzugsweise ist zur Speisung des Vorwärmmoduls ein Spartransformator vorgesehen, welcher mit dem Netz verbunden ist. Damit wird der für die Versorgung mit elektrischer Energie erforderliche Aufwand minimiert.

Die Erfindung erstreckt sich weiter auf ein entsprechendes Verfahren zum Vorwärmen der Windenergieanlagen. Für nähere Erläuterungen wird auf obige Ausführungen verwiesen.

Die Erfindung wird nachfolgend unter Bezugnahme auf die beigefügte Zeichnung erläutert, in der ein vorteilhaftes Ausführungsbeispiel dargestellt ist. Es zeigen:
- Fig. 1: eine schematische Darstellung einer Windenergie- anlage gemäß einem Ausführungsbeispiel der Erfin- dung;
- Fig. 2: ein Funktionsschaubild mit den wesentlichen Kom- ponenten der Windenergieanlage gemäß Fig. 1; und
- Fig. 3: ein Blockschaltbild des verwendeten Vorwärmmo- duls.

Die Windenergieanlage gemäß einem Ausführungsbeispiels der Erfindung umfasst einen Turm 10 mit einer an seinem oberen Ende angeordneten Gondel 11. Sie ist in Azimutrichtung schwenkbar ausgeführt, so dass sie entsprechend der Windrichtung gedreht werden kann. Im Inneren der Gondel sind ein Generator 14, ein Umrichter 15 sowie eine Top-Box 21 mit einer Steuereinrichtung 16 angeordnet. Der Generator 14 ist angetrieben durch einen drehbar an einer Stirnseite der Gondel 11 angeordneten Windrotor 12. Er umfasst mehrere (in der Regel drei) bezüglich ihres Anstellwinkels verstellbare Rotorblätter 13. Zum Verstellen des Anstellwinkels (Pitch) ist eine Pitchverstelleinheit 17 in der Nabe des Windrotors 12 vorgesehen.

Am Fuß des Turms 10 sind in einer Bodeneinheit 20 eine unterbrechungsfreie Stromversorgungseinheit 18 sowie ein Transformator 9 zum Anschluss an ein Netz (nicht dargestellt) angeordnet. Der Generator 14 sowie der Umrichter 15 speisen die erzeugte elektrische Leistung über eine nicht dargestellte Leitung in die Bodenbox 20 sowie den Transformator 9 zur Abgabe an das elektrische Netz ein.

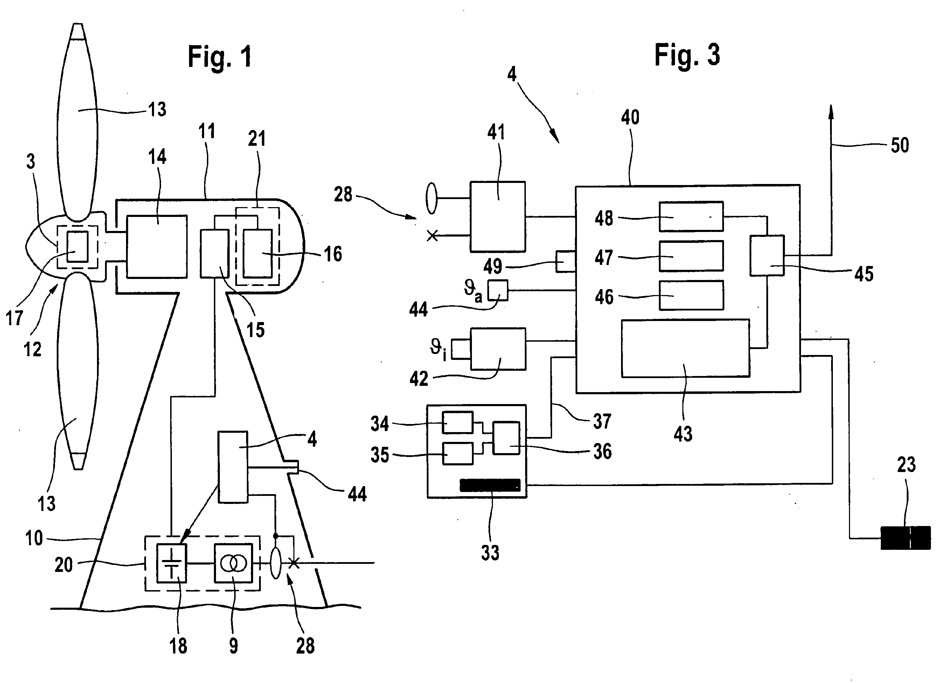

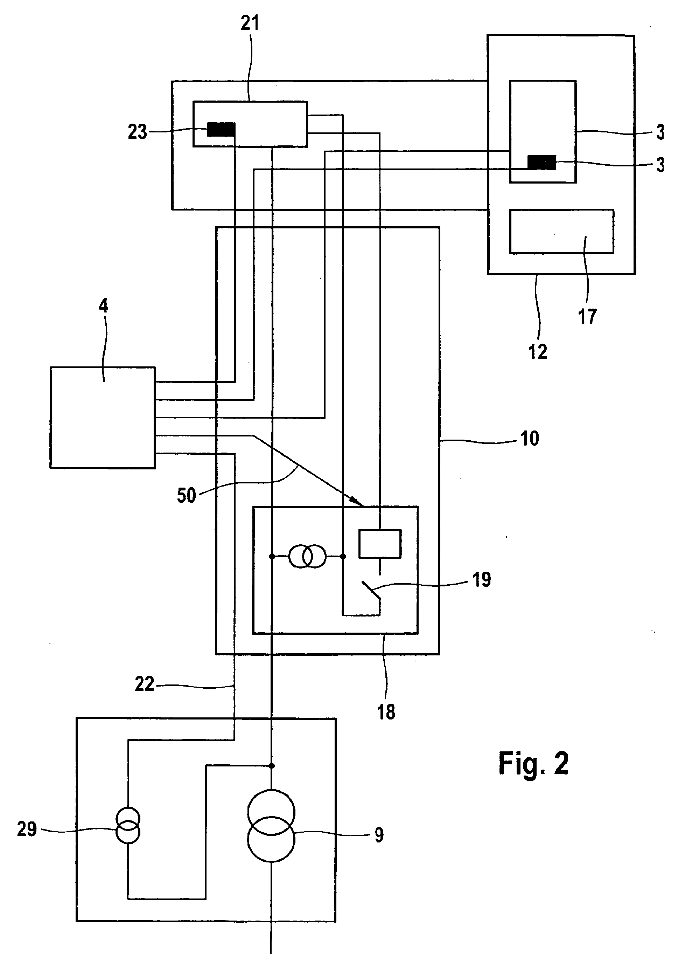

Weiter ist an der Windenergieanlage ein Vorwärmmodul 4 gemäß der Erfindung angeordnet. Es wird nachfolgend unter Bezugnahme auf die Figuren 2 und 3 näher beschrieben. Das Vorwärmmodul 4 und seine elektrische Einbindung in die Windenergieanlage sind in Fig. 2 dargestellt. In dem Transformator 9 ist ein in Sparschaltung ausgeführter Zusatztrafo 29 zur Versorgung des Vorwärmmoduls 4 vorgesehen. Dank der Ausführung als Sparschaltung ist für diesen zusätzlichen Transformator 29 nur ein geringer Hardwareaufwand erforderlich und der durch ihn verursachte Energieverbrauch ist äußerst gering. Der Zusatztransformator 29 speist über eine 400 V-Leitung 22 das Vorwärmmodul 4. An jenes sind mehrere Heizeinrichtungen 23, 33 angeschlossen. Weiter ist eine Signalleitung 50 für ein Freigabesignal herausgeführt, welche an die USV-Einheit 18 angeschlossen ist, die die Steuereinrichtung 16, die Pitchsteuereinheit 17 und andere Komponenten der Windenergieanlage mit elektrischer Leistung versorgt. Dabei ist die USV-Einheit 18 so ausgebildet, dass sie nach einem Netzausfall bei Netzwiederkehr die Spannung über ihren Schalter 19 erst dann wieder an die Steuereinrichtung 16, die Pitchsteuereinheit 17 etc. durchschaltet, wenn das Freigabesignal vor dem Vorwärmmodul 4 anliegt. Die Heizeinrichtung 33 für das Pitchsystem 17 ist an einem abgesetzten Pitchmodul 3 in der Nabe des Rotors 12 angeordnet. Es umfasst außer der Heizeinrichtung 33 einen Thermoschalter 34 sowie ein Zeitrelais 35 (in Fig. 2 nicht dargestellt). Der Thermoschalter 34 ist dazu ausgebildet, bei Erreichen einer gewünschten Schwelltemperatur ein entsprechendes erstes Steuersignal an das Vorwärmmodul 4 zu übermitteln. Das Zeitrelais 35 ist dazu ausgebildet, im Falle eines Defekts des Thermoschalters 34 oder ggf. auch der Heizeinrichtung 33 nach einer vorregelbaren Zeitdauer ebenfalls das erste Steuersignal an das Vorwärmmodul 4 auszugeben, um so ein weiteres Hochfahren der Windenergieanlage auch in diesem Fall zu ermöglichen.

Es können weitere Heizeinrichtungen in der Gondel 11, insbesondere an der Top-Box 21, oder im Turm 10, insbesondere in der Bodenbox 20, vorgesehen sein. Entsprechend kann je nach Bedarf den weiteren Heizeinrichtungen 23 ein Thermoschalter zugeordnet sein.

Für die Beschreibung der funktionellen Zusammenhänge und für die Erläuterung der Durchführung des Vorwärmens vor einem Hochfahren der Windenergieanlage wird auf Fig. 3 Bezug genommen. Das Vorwärmmodul 4 umfasst als zentrales Element eine Kontrolleinheit 40. An ihr sind drei Eingangssignale angeschlossen. An einem ersten Eingang ist ein Netzstatusdetektor 41 angeschlossen. Alternativ oder zusätzlich kann auch vorgesehen sein, an den ersten Eingang einen Signaleingang für ein Hochfahrsignal anzuschließen. Damit ist es ermöglicht, von einer externen Steuereinrichtung ein Hochfahrsignal an die Windenergieanlage anzulegen. Nachfolgend wird die Funktionsweise der Erfindung näher beschrieben unter Berücksichtigung des Netzstatusdetektors 41, wobei die Erfindung aber nicht auf die Verwendung mit einem solchen beschränkt ist. Dieser erfasst über am Transformator 9 angeordnete Strom- und/oder Spannungssensoren 28 die entsprechenden elektrischen Charakteristika des Netzes, und bestimmt daraus mittels an sich bekannter Algorithmen, wann eine Netzstörung, insbesondere ein Netzausfall, vorliegt und wann die Störung beendet ist, insbesondere das Netz nach einem Ausfall wiederkehrt. Im Fall der Wiederkehr wird ein Ausgangssignal durch den Netzstatusdetektor 41 ausgegeben und an den ersten Eingang der Kontrolleinheit 40 angelegt. An einem zweiten Eingang der Kontrolleinheit 40 ist ein Außentemperatursensor 44 angeschlossen. Dieser ist dazu ausgebildet, die Temperatur ϑ*_{A}* in der Umgebung der Windenergieanlage zu erfassen. Zusätzlich oder alternativ kann ein Sensor für relative Feuchte 49 vorgesehen sein. Vorzugsweise ist er in der Top-Box 21 angeordnet, ferner können zusätzliche an anderen zu überwachenden Komponenten vorgesehen sein. Aus Vereinfachungsgründen ist auch eine Anordnung des Feuchtesensors 49 an der Kontrolleinheit 40 möglich. An dem dritten Eingang ist eine Signalleitung 37 für die im Pitchmodul 17 durch die Beheizung erreichte Temperatur angeschlossen. Am anderen Ende der Signalleitung ist ein Auswertemodul 36, an das der Temperatursensor 34 sowie ein Zeitrelais 35 angeschlossen sind, vorgesehen. Es sei eingemerkt, dass das Zeitrelais 35 sowie das Auswertemodul 36 nicht zwingend extern, sondern auch intern in der Kontrolleinheit 40 angeordnet sein können. Das Auswertemodul 36 ist dazu ausgebildet, ein Signal auszugeben, wenn die von dem Temperatursensor 34 ermittelte Temperatur eine bestimmte Schwelle erreicht hat. Dabei wird zusätzlich ein Zeitsignal von dem Zeitrelais 35 ausgewertet, und, wenn eine bestimmte Zeitdauer verstrichen ist, unabhängig von der von dem Temperatursensor 34 ermittelten Temperatur das Signal ausgegeben. Damit ist sichergestellt, dass auch bei Ausfall des Temperatursensors 34 oder der Heizeinrichtung 33 nach einer bestimmten Zeit, die durch das Zeitrelais 35 vorgegeben ist, ein entsprechendes Signal an die Kontrolleinheit 40 angelegt ist.

Die Kontrolleinheit 40 weist weiter drei (oder mehr) Ausgänge auf. An einem ersten Ausgang ist die Signalleitung 50 mittels Freigabesignal zum Freigeben des Hochfahrens der Steuerung 16 der Windenergieanlage ausgegeben, welches in dem in Fig. 1 dargestellten Ausführungsbeispiel an die USV-Einheit 18 angelegt ist. An dem zweiten Ausgang ist die Heizeinrichtung 23 angeschlossen (ggf. sind weitere Heizeinrichtungen 23 sind an vierte und weitere Ausgänge angeschlossen). An einem dritten Ausgang ist die Heizeinrichtung 33 für das Pitchsystem 3 angeschlossen.

Die Kontrolleinheit 40 weist ein zentrales Rechenmodul 43 auf. Weiter sind spezielle Module für einzelne Funktionen vorgesehen. Ein Bypassmodul 48 wirkt mit dem Außentemperatursensor 44 zusammen und ist dazu ausgebildet, dass bei Überschreiten einer gewissen Außentemperatur das Freigabesignal direkt über die Leitung 50 ausgegeben wird. Der Schritt des Vorwärmens wird auf diese Weise übersprungen.

Das Rechenmodul 43 ist dazu ausgebildet, anhand der von dem Netzstatusdetektor 41 erkannten Netzwiederkehr ein Vorwärmen als Vorstufe vor dem eigentlichen Hochfahren der Komponenten der Windenergieanlage durchzuführen. Dazu werden die Heizeinrichtungen 23, 33 aktiviert. Diese beheizen die verschiedenen Komponenten der Windenergieanlagen, wie die Bodenbox 20, die Top-Box 21, das Pitchsystem 17 etc. Die durch die Beheizung der Heizeinrichtungen 23, 33 erreichte Temperatur wird über Temperatursensoren erfasst, wie nachfolgend am Beispiel des Temperatursensors 34 des Pitchsystems 3 näher erläutert wird. Signalisiert dieser Temperatursensor 34 das Erreichen der eingestellten Temperaturschwelle, so wird über das Auswertemodul 36 ein entsprechendes Signal an die Kontrolleinheit 40 ausgegeben. Die Kontrolleinheit 40 stellt dann die Heizeinrichtungen 23, 33 ab und gibt ein Freigabesignal über die Leitung 50 aus. Weiter ist ein Zeitglied 46 vorgesehen, welches sicherstellt, dass nach Verstreichen einer bestimmten Zeitdauer in jedem Fall das Freigabesignal 50 ausgegeben wird. Damit ist sichergestellt, dass die Windenergieanlage auch dann hochfährt, wenn der Temperatursensor 34 oder gar Heizeinrichtungen 23, 33 versagen.

Es ist nicht zwingend, dass bei dem Erreichen der eingestellten Temperatur und der Ausgabe des Freigabesignals die Heizeinrichtungen 23, 33 abgestellt werden. Es kann auch ein Nachheizmodul 47 vorgesehen sein. Es ist dazu ausgebildet, die Heizeinrichtungen 23, 33 auch nach Erreichen der Temperaturschwelle und Ausgeben des Freigabesignals weiter zu betreiben, um die Temperatur noch weiter zu erhöhen oder zumindest zu stabilisieren. Vorzugsweise ist das Nachheizmodul an den Außentemperatursensor 44 angeschlossen, um ein Nachheizen in solchen Fällen durchzuführen, wenn dies aufgrund besonders tiefer Temperaturen sinnvoll und erforderlich ist. Das Nachheizmodul 47 kann dazu weitergebildet sein, um auch im laufenden Betrieb der Windenergieanlage ein Auskühlen zu vermeiden. Dies kann unter ungünstigen Witterungsbedingungen dann auftreten, wenn bei sehr niedriger Außentemperatur nur wenig Wind herrscht und damit die Windenergieanlage im Teillastbetrieb läuft, so dass die Windenergieanlage nicht ausreichend durch die Abwärme der Komponenten des Antriebsstrangs, insbesondere des Getriebes und des Generators 14, erwärmt wird. Um ein solches Auskühlen im Betrieb zu erkennen, ist zweckmäßigerweise ein Temperaturwächter 42 vorgesehen. Er weist einen Innentemperatursensor auf und gibt ein Signal zur Betätigung des Nachheizmoduls 47 an die Kontrolleinheit 40 aus, wenn die Innentemperatur unter einen vorgebbaren Grenzwert sinkt. Das Nachheizmodul 47 betätigt dann die Heizeinrichtungen 23, 33 so lange, bis die Innentemperatur einen ausreichenden Wert erreicht hat, oder bis sich die Windenergieanlage aufgrund von mehr Abwärme durch höhere Last bei auffrischendem Wind selbständig ausreichend aufgewärmt hat.

Es sei angemerkt, dass außer den Temperatursensoren zusätzlich oder alternativ auch auf einen Sensor für relative Feuchte 49 zurückgegriffen werden kann. Überschreitet die relative Feuchte ein bestimmtes Maß, so besteht die Gefahr für die Integrität empfindlicher elektronischer Komponenten. In diesem Fall wird dann, entsprechend dem Vorgehen bei zu niedriger Temperatur, durch das erfindungsgemäße Vorwärmmodul 4 eine Beheizung durchgeführt.

Ist das Freigabesignal über die Leitung 50 ausgegeben, schaltet die USV-Einheit durch und legt die vollen Versorgungsspannungen aus dem Netz an die Steuereinrichtung 16, das Pitchsystem 17 sowie weitere Komponenten, wie den Umrichter 15, an. Dank der durch das Vorwärmmodul 2 bewirkten Vorwärmung sind die Komponenten ausreichend warm und können auch bei extrem kalten Außentemperaturen dann sofort den Betrieb aufnehmen. Das weitere Hochfahren der Anlagen erfolgt dann in jedem Fall synchron und ohne Beeinträchtigung durch die niedrige Außentemperatur. Anstelle einer indirekten Freigabe über die USV-Einheit 18 kann auch ein direktes Zuschalten der Komponenten der Windenergieanlage erfolgen. Bei einer solchen vereinfachten Ausführungsform wirkt das Schaltsignal 50 direkt auf den Schalter 19 und schaltet damit unmittelbar die Stromversorgung der Komponenten der Windenergieanlage ein, so dass diese hochfährt.

## Patentansprüche

1. Windenergieanlage mit einem Turm (10), einer darauf angeordneten Gondel (11), welche einen Windrotor (12) und einen davon angetriebenen Generator (14) umfasst, einem Umrichter (15) zur Abgabe elektrischer Energie und einer Steuereinrichtung (16), wobei die Windenergieanlage an ein Netz angeschlossen ist und für die Steuereinrichtung (16) ein Temperatursensor und eine Heizeinrichtung vorgesehen sind, wobei
ein zusätzliches Vorwärmmodul (4) vorgesehen ist, das einen Thermoschalter (34, 36), der die Temperatur mindestens einer Komponente überwacht und bei Erreichen einer Schwelle betätigt wird, eine Kontrolleinheit (40) sowie eine Ausgabeeinrichtung (45) umfasst, und in der Weise mit der Heizeinrichtung zusammenwirkt, dass die Kontrolleinheit (40) die Heizeinrichtung (33) betätigt, bis der Thermoschalter (34, 36) anspricht und daraufhin die Ausgabeeinrichtung (45) ein Freigabesignal (50) übermittelt,
**dadurch gekennzeichnet, dass**
das Vorwärmmodul einen Netzstatusdetektor (41) umfasst, wobei
das Vorwärmmodul (4) mit dem Netzstatusdetektor (41) und der Kontrolleinheit (40) derart zusammenwirkt, dass nach einem Netzausfall bei erkannter Netzwiederkehr die Heizeinrichtung (33) betätigt wird.

2. Windenergieanlage nach Anspruch 1,
**dadurch gekennzeichnet, dass**
das Freigabesignal (50) direkt oder indirekt auf eine Schalteeinheit (19) einwirkt, welche die Stromversorgung mindestens einer Komponente (18, 20, 21) der Windenergieanlage herstellt.

3. Windenergieanlage nach Anspruch 2,
**dadurch gekennzeichnet, dass**
eine USV-Einheit (18) den Schalter umfasst und die Kontrolleinheit (40) dazu ausgebildet ist, die USV-Einheit (18) erst dann durchzuschalten, wenn die übrigen Komponenten auf eine bestimmte Temperatur aufgeheizt sind.

4. Windenergieanlage nach einem der Ansprüche 1 bis 3,
**dadurch gekennzeichnet, dass**
zusätzlich ein Zeitglied (46) vorgesehen ist, das eine Mindesteinschaltdauer für die Heizelemente (23, 33) vorgibt und bis zu deren Ablauf die Ausgabeeinrichtung (45) blockiert.

5. Windenergieanlage nach einem der Ansprüche 1 bis 4,
**dadurch gekennzeichnet, dass**
mehrere Heizeinrichtungen (23, 33) für verschiedene Bereiche der Windenergieanlage vorgesehen sind, insbesondere für eine Top-Box (21), eine Bodenbox (20) und/oder eine USV-Einheit (18).

6. Windenergieanlage nach einem der vorangehenden Ansprüche,
**dadurch gekennzeichnet, dass**
ein eigener Temperatursensor (34) in einer Heizeinrichtung (33) an einem Pitchmodul (3) der Windenergieanlage vorgesehen ist.

7. Windenergieanlage nach einem der Ansprüche 1 bis 6,
**dadurch gekennzeichnet, dass**
parallel zum Temperatursensor (34) ein Zeitrelais (35) geschaltet ist, das nach einer einstellbaren Zeit auslöst.

8. Windenergieanlage nach einem der vorangehenden Ansprüche,
**dadurch gekennzeichnet, dass**
die Kontrolleinheit (40) die Heizeinrichtung (33) erst betätigt, wenn mindestens ein Temperaturgrenzwert in mindestens einer Komponente (18, 20, 21) unterschritten wurde.

9. Windenergieanlage nach einem der vorangehenden Ansprüche,
**dadurch gekennzeichnet, dass**
ein Umgebungstemperatursensor (44) vorgesehen ist, der mit einem Bypassmodul (48) zusammenwirkt, die die Ausgabeeinrichtung (45) bei Überschreiten einer bestimmten Außentemperatur direkt freischaltet.

10. Windenergieanlage nach Anspruch 9,
**dadurch gekennzeichnet, dass**
ein Nachheizmodul (47) vorgesehen ist, welches in Abhängigkeit von der Außentemperatur auch nach Ausgabe des Freigabesignals nachheizt.

11. Windenergieanlage nach Anspruch 10,
**dadurch gekennzeichnet, dass**
das Nachheizmodul (47) einen Temperaturwächter (42) umfasst, welcher mit der Kontrolleinheit (40) so zusammenwirkt, dass im Betrieb bei Unterschreiten einer Grenztemperatur die Heizeinrichtung (33) betätigt wird.

12. Windenergieanlage nach Anspruch 11,
**dadurch gekennzeichnet, dass**
ein Innentemperatursensor als Eingangssignal an den Temperaturwächter (42) angelegt ist.

13. Verfahren zum Betreiben einer Windenergieanlage mit einem Turm (10), einer darauf angeordneten Gondel (11), welche einen Windrotor (12) und einen davon angetriebenen Generator (14) umfasst, einem Umrichter (15) zur Abgabe elektrischer Energie und einer Steuereinrichtung (16), wobei zumindest einige der Komponenten der Windenergieanlage beheizt werden, mit den Schritten
Überwachen eines Signals für Betriebsaufnahme,
Betätigen einer Heizeinrichtung zum Beheizen von mindestens einer der Komponenten der Windenergieanlage,
Überwachen der erreichten Temperatur, und
Auslösen eines Schaltsignals bei Erreichen einer bestimmten Schwelle,
um dann ein Freigabesignal an die Steuereinrichtung zum Hochfahren der Windenergieanlage zu übermitteln,
**dadurch gekennzeichnet, dass**
nach einem Netzausfall bei erkannter Netzwiederkehr durch
einen Netzstatusdetektor die Heizeinrichtung betätigt wird.

14. Verfahren nach Anspruch 13,
**dadurch gekennzeichnet, dass**
die Windenergieanlage nach einem der Ansprüche 2 bis 12 ausgebildet ist.

## Claims

1. Wind energy installation having a tower (10), a pod (11) which is arranged thereon and has a wind rotor (12) and a generator (14) driven by it, having a converter (15) for outputting electrical power and having a control device (16), wherein the wind energy installation is connected to a network, and a temperature sensor and a heating device are provided for the control device (16), wherein
an additional preheating module (4) is provided, which has a thermal switch (34, 36), which monitors the temperature of at least one component and is operated on reaching a threshold, a monitoring unit (40) as well as an output device (45), and interacts with the heating device such that the monitoring unit (40) operates the heating device (33) until the thermal switch (34, 36) responds, and the output device (45) then transmits an enable signal (50),
**characterized in that**
the preheating module has a network status detector (41), wherein the preheating module (4) interacts with the network status detector (41) and the monitoring unit (40) such that after a network failure the heating device (33) is operated when it is found that the network has returned.

2. Wind energy installation according to Claim 1,
**characterized in that**
the enable signal (50) acts directly or indirectly on a switching unit (19), which produces the electrical power supply for at least one component (18, 20, 21) of the wind energy installation.

3. Wind energy installation according to Claim 2,
**characterized in that**
a UPS unit (18) has the switch, and the monitoring unit (40) is designed to switch on the UPS unit (18) only when the other components have been heated to a specific temperature.

4. Wind energy installation according to one of Claims 1 to 3,
**characterized in that**
a timer (46) is additionally provided, which presets a minimum switched-on duration for the heating elements (23, 33) and blocks the output device (45) until this time has elapsed.

5. Wind energy installation according to one of Claims 1 to 4,
**characterized in that**
a plurality of heating devices (23, 33) are provided for different areas of the wind energy installation, in particular for a top box (21), a bottom box (20) and/or a UPS unit (18).

6. Wind energy installation according to one of the preceding claims,
**characterized in that**
a dedicated temperature sensor (34) is provided in a heating device (33) on a pitch module (3) of the wind energy installation.

7. Wind energy installation according to one of Claims 1 to 6,
**characterized in that**
a timing relay (35) is connected in parallel with the temperature sensor (34) and is triggered after an adjustable time.

8. Wind energy installation according to one of the preceding claims,
**characterized in that**
the monitoring unit (40) operates the heating device (33) only when at least one temperature limit value has been undershot in at least one component (18, 20, 21).

9. Wind energy installation according to one of the preceding claims,
**characterized in that**
an ambient temperature sensor (44) is provided, which interacts with a bypass module (48) and switches on the output device (45) directly when a specific external temperature is exceeded.

10. Wind energy installation according to Claim 9,
**characterized in that**
a reheating module (47) is provided, which provides reheating as a function of the external temperature, even after the enable signal has been output.

11. Wind energy installation according to Claim 10,
**characterized in that**
the reheating module (47) comprises a temperature monitor (42) which interacts with the monitoring unit (40) such that the heating device (33) is operated when a limit temperature is undershot during operation.

12. Wind energy installation according to Claim 11,
**characterized in that**
an internal temperature sensor is applied as an input signal to the temperature monitor (42).

13. Method for operation of a wind energy installation having a tower (10), a pod (11) which is arranged thereon and has a wind rotor (12) and a generator (14) driven by it, having a converter (15) for outputting electrical power and having a control device (16), wherein at least some of the components of the wind energy installation are heated, having the steps of
monitoring of a signal for the start of operation,
operation of a heating device for heating at least one of the components of the wind energy installation,
monitoring the temperature that is reached, and triggering a switching signal on reaching a specific threshold,
in order then to transmit an enable signal to the control device in order to start up the wind energy installation,
**characterized in that**
after a network failure the heating device is operated by a network status detector when it is found that the network has returned.

14. Method according to Claim 13,
**characterized in that**
the wind energy installation is designed according to one of Claims 2 to 12.

## Revendications

1. Éolienne, comportant un mât (10) surmonté d'une nacelle (11), qui comporte un rotor (12) et un générateur (14) actionné par ce dernier, un convertisseur (15) pour délivrer l'énergie électrique, et un dispositif de commande (16), ladite éolienne étant raccordée à un réseau, un capteur de température et un dispositif de chauffage étant prévus pour le dispositif de commande (16), sachant que il est prévu un module de préchauffage (4) additionnel, lequel comporte un commutateur thermostatique (34, 36), qui contrôle la température d'au moins un composant et qui est actionné lorsqu'une valeur seuil est atteinte, ainsi qu'une unité de contrôle (40) et un dispositif de sortie (45), et lequel coopère avec le dispositif de chauffage de telle sorte que l'unité de contrôle (40) actionne le dispositif de chauffage (33) jusqu'à ce que le commutateur thermostatique (34, 36) réagisse et que, à la suite de cela, le dispositif de sortie (45) transmette un signal de déblocage (50),
**caractérisée en ce que**
le module de préchauffage comporte un détecteur d'état du réseau (41), le module de préchauffage (4) coopérant avec le détecteur d'état du réseau (41) et l'unité de contrôle (40) de telle sorte qu'à la suite d'une panne de courant, le dispositif de chauffage (33) est actionné lorsqu'un rétablissement du courant est détecté.

2. Éolienne selon la revendication 1,
**caractérisée en ce que**
le signal de déblocage (50) agit directement ou indirectement sur une unité de commutation (19), qui établit l'alimentation en courant d'au moins un composant (18, 20, 21) de l'éolienne.

3. Éolienne selon la revendication 2,
**caractérisée en ce**
**qu'**une unité d'alimentation sans interruption (18) comporte le commutateur, l'unité de contrôle (40) étant configurée pour connecter l'unité d'alimentation sans interruption (18) seulement lorsque les autres composants sont chauffés à une température déterminée.

4. Éolienne selon l'une quelconque des revendications 1 à 3,
**caractérisée en ce**
**qu'**il est prévu, en plus, un temporisateur (46), qui définit une durée de connexion minimum pour les éléments de chauffage (23, 33) et bloque le dispositif de sortie (45) jusqu'à l'expiration de ladite durée de connexion.

5. Éolienne selon l'une quelconque des revendications 1 à 4,
**caractérisée en ce**
**qu'**il est prévu plusieurs dispositifs de chauffage (23, 33) pour différentes zones de l'éolienne, en particulier pour un coffret supérieur (21), un coffret inférieur (20) et/ou une unité d'alimentation sans interruption (18).

6. Éolienne selon l'une quelconque des revendications précédentes,
**caractérisée en ce**
**qu'**un propre capteur de température (34), dans un dispositif de chauffage (33), est prévu sur un module de calage des pales (3) de l'éolienne.

7. Éolienne selon l'une quelconque des revendications 1 à 6,
**caractérisée en ce**
**qu'**un relais temporisé (35) est monté en parallèle avec le capteur de température (34) et se déclenche après un temps réglable.

8. Éolienne selon l'une quelconque des revendications précédentes,
**caractérisée en ce que**
l'unité de contrôle (40) actionne le dispositif de chauffage (33) uniquement lorsqu'au moins une valeur limite de température dans au moins un composant (18, 20, 21) est en dessous de la limite inférieure.

9. Éolienne selon l'une quelconque des revendications précédentes,
**caractérisée en ce**
**qu'**il est prévu un capteur de température ambiante (44) qui coopère avec un module de by-pass (48), qui débloque directement le dispositif de sortie (45) lorsqu'une température extérieure déterminée est dépassée.

10. Éolienne selon la revendication 9,
**caractérisée en ce**
**qu'**il est prévu un module de post-chauffage (47) qui, en fonction de la température extérieure, continue à chauffer même après l'émission du signal de déblocage.

11. Éolienne selon la revendication 10,
**caractérisée en ce que**
le module de post-chauffage (47) comporte un contrôleur de température (42), qui coopère avec l'unité de contrôle (40) de telle sorte que le dispositif de chauffage (33) est actionné dès que, en cours de service, la température est en dessous d'une température limite.

12. Éolienne selon la revendication 11,
**caractérisée en ce**
**qu'**un capteur de température intérieure délivre un signal d'entrée appliqué au contrôleur de température (42).

13. Procédé pour l'exploitation d'une éolienne, comportant un mât (10) surmonté d'une nacelle (11), qui comporte un rotor (12) et un générateur (14) actionné par ce dernier, un convertisseur (15) pour délivrer l'énergie électrique, et un dispositif de commande (16), sachant qu'au moins certains des composants de l'éolienne sont chauffés, comportant les étapes de:
surveillance d'un signal pour la mise en service,
actionnement d'un dispositif de chauffage pour chauffer au moins un des composants de l'éolienne,
surveillance de la température atteinte, et
déclenchement d'un signal de commutation lorsqu'une valeur seuil déterminée est atteinte,
pour transmettre alors un signal de déblocage au dispositif de commande en vue du démarrage de l'éolienne,
**caractérisé en ce que**
à la suite d'une panne de courant, le dispositif de chauffage est actionné lorsque le rétablissement du courant est détecté par un détecteur d'état du réseau.

14. Procédé selon la revendication 13,
**caractérisé en ce que**
l'éolienne est configurée selon l'une quelconque des revendications 2 à 12.
